**Europäisches Patentamt**

**European Patent Office**

**Office européen des brevets**

(19)

(11) Veröffentlichungsnummer: **0 081 606**
**B1**

(12) **EUROPÄISCHE PATENTSCHRIFT**

(45) Veröffentlichungstag der Patentschrift:
**18.03.87**

(21) Anmeldenummer: **81110433.0**

(22) Anmeldetag: **14.12.81**

(51) Int. Cl.⁴: **G 07 C 1/00**

(54) **Verfahren zur Ermittlung der Benutzung der einzelnen Personen-Transport- und Vergnügungseinrichtungen einer Anlage.**

(43) Veröffentlichungstag der Anmeldung:
**22.06.83 Patentblatt 83/25**

(45) Bekanntmachung des Hinweises auf die Patenterteilung:
**18.03.87 Patentblatt 87/12**

(84) Benannte Vertragsstaaten:
**AT CH DE FR IT LI**

(56) Entgegenhaltungen:
**DE-A-2 306 981**
**DE-A-3 001 888**
**FR-A-2 244 215**
**FR-A-2 308 993**
**US-A-3 448 459**
**US-A-3 757 089**

(73) Patentinhaber: **Ski- Data Computer-
Handelsgesellschaft m.b.H., Berchtesgadener
Strasse 10, A-5083 St. Leonhard bei Grödig (AT)**

(72) Erfinder: **Wallerstorfer, Kurt, Elsa-
Bröndströmstrasse 4, A-5020 Salzburg (AT)**

(74) Vertreter: **Haft, Berngruber, Czybulka, Hans-
Sachs- Strasse 5, D-8000 München 5 (DE)**

EP 0 081 606 B1

## Beschreibung

Die Erfindung bezieht sich auf ein Verfahren zur Ermittlung der Benutzungsdauer bestimmter von mehreren Personentransport- und/oder Vergnügungseinrichtungen einer Anlage durch eine eine Berechtigungskarte besitzende Person, wobei an jeder der bestimmten Personentransport- bzw. Vergnügungseinrichtungen eine Vorrichtung zur Kontrolle von Berechtigungskarten vorgesehen ist, die eine Einrichtung zum Lesen der Berechtigungskarte beim Zugang zu der betreffenden Personentransport- bzw. Vergnügungseinrichtung sowie eine Rechenanlage, die jeden Zugang registriert, aufweist.

Die Berechtigungskarten werden an einem Automaten oder einer bedienten Kasse gekauft. Bei mehreren zu einem Verbund zusammengeschlossenen Personentransporteinrichtungen oder in Vergnügungsparks mit mehreren Vergnügungseinrichtungen hat der Benutzer mit einer solchen Berechtigungskarte dann die Möglichkeit von dem Gesamtangebot an Personentransport- bzw. Vergnügungseinrichtungen diejenige auszuwählen, die er zu benutzen wünscht. Vor dem Zugang zu der betreffenden Personentransport- bzw. Vergnügungseinrichtung wird die Berechtigung der Person anhand der Berechtigungskarte mit einer Kontrollvorrichtung geprüft.

Bei den zu einem Verbund zusammengeschlossenen Personentransporteinrichtungen, z.B. mehrere Gondelbahnen und mehrere Lifte eines Wintersportgebietes, ist der Preis für die Benutzung der einzelnen Gondelbahnen sowie der einzelnen Skilifte in aller Regel unterschiedlich. Dabei werden neben Berechtigungskarten für eine einmalige Benutzung, Berechtigungskarten für eine mehrmalige Benutzung (sogenannte Punktekarten), sowie Berechtigungskarten, die für einen bestimmten Zeitraum z.B. einen Tag oder eine Woche Gültigkeit haben (sogenannte Tages- bzw. Wochenskipässe) verkauft. Damit eine exakte Verteilung der durch den Kartenverkauf eingenommenen Gelder auf die einzelnen Gondelbahnen und Skilifte möglich ist, ist an jeder Gondelbahn und jedem Lift eine Kontrollvorrichtung vorgesehen, mit der der Zugang und damit die Benutzung der betreffenden Gondelbahn bzw. des betreffenden Liftes registriert wird.

Auch ist manchmal nicht an allen, sondern nur an bestimmten Gondelbahnen oder Liften eine Kontrollvorrichtung vorgesehen, beispielsweise wenn der Transport zu mehreren Liften nur mit einer Gondelbahn möglich ist und die Gondelbahn und die ihr zugeordneten Lifte ein und demselben Eigentümer gehören.

Um mit Skipässen jede Gondelbahn- bzw. Liftbenutzung zu registrieren, ist es bekannt, die Skipässe mit codierten Daten zur Identifikation der einzelnen Berechtigungskarten zu versehen. Bei jedem Zugang zu der betreffenden Gondelbahn bzw. dem betreffenden Lift wird die Karte in die Kontrollvorrichtung gesteckt, wobei die Leseeinrichtung die codierten Daten überprüft und sie einer Rechenanlage zuführt, die die Daten speichert. Das heißt, an jedem Zugang ist eine Rechenanlage mit einem Speicher mit einer relativ großen Kapazität erforderlich, so daß derartige Anlagen sehr kostspielig sind. Ähnlich hohe Kosten entstehen dann, wenn nur eine Zentralrechenanlage für die gesamte Wintersportanlage verwendet wird, da dann die Kontrollvorrichtungen sämtlicher Gondelbahnen und Skilifte mit dieser Zentralrechenanlage verkabelt werden müssen. Durch die Größe der Speicher sind die Rechenanlagen bzw. ist die Zentralrechenanlage außerdem entsprechend störungsanfällig. Auch ist bei einem Ausfall des bzw. der Rechenanlagen keine Wiederauffindung der Daten möglich. Die Karte mit dem Loch- bzw. Strichcode ist darüberhinaus relativ groß und unhandlich.

Um eine Doppelverwendung, also beispielsweise ein Zurückreichen der Karte durch die Person, die die Kontrollvorrichtung passiert hat, an eine vor derselben befindliche Person zu verhindern, muß der Speicher der Rechenanlage zusätzlich so ausgelegt sein, daß die Karte für einen vorgegebenen Zeitraum, der der Zeit für die Auf- und Abfahrt entspricht, wie eine ungültige Karte behandelt wird.

Aus Traditionsgründen erfolgt bei manchen Skigebieten eine Abrechnung nach Halb- oder Ganztagessätzen. Das heißt, ein Skifahrer mit einem Wochenskipaß kann z.B. an einem bestimmten Skitag wahlweise nur eine von zwei zu einem Verbund zusammengeschlossenen Gondelbahnen benutzen. Um den Skipaß dann für die andere Gondelbahn an diesem Tag ungültig zu machen, ist es erforderlich, die Rechenanlagen der Kontrollvorrichtungen beider Gondelbahnen miteinander zu verkabeln, was bei den dafür in der Praxis vorkommenden Entfernungen solcher Gondelbahnen von mehreren Kilometern mit immensen Kosten verbunden ist.

Der Erfindung liegt die Aufgabe zugrunde, ein Verfahren der eingangs genannten Art zu schaffen, bei dem jede Kontrollvorrichtung mit einer Rechenanlage ohne großen Speicher und ohne Zentralverkabelung auskommt, die also relativ kostengünstig ist und dennoch eine genaue Verteilung der durch den Kartenverkauf eingenommenen Gelder auf die einzelnen Personentransport- und Vergnügungseinrichtungen der Anlage zuläßt.

Das erfindungsgemäße Verfahren ist nachstehend am Beispiel einer Anlage mit einem Skilift A und einem Skilift B näher erläutert.

Die tägliche Betriebsdauer der Anlage und damit der beiden Skilifte A und B umfaßt acht Stunden, nämlich von 8 Uhr bis 16 Uhr. Um 10 Uhr beginnt beispielsweise ein Skifahrer mit einem gültigen Wochenskipaß am Lift A seinen Skitag. Die Schreibeinrichtung der Kontrolleinrichtung am Zugang des Liftes A beschreibt dann einen magnetischen Datenträger in dem Skipaß mit Kenndaten für den Lift A, mit dem Kalenderdatum sowie der Uhrzeit. Die Rechenanlage der Kontrollvorrichtung des Liftes A schreibt dem Lift A gleichzeitig sechs Benutzerstunden (10 bis 16 Uhr) gut.

Um 12 Uhr wechselt der Skifahrer vom Lift A über zum Lift B. Die Lesevorrichtung der Kontrollvorrichtung am Zugang des Liftes B liest dann die Kenndaten für den Lift A, das Kalenderdatum sowie die Uhrzeit (10 Uhr) von dem magnetischen Datenträger des Skipasses ab, während die Schreibvorrichtung der Kontrollvorrichtung des Liftes B die neue Uhrzeit, nämlich 12 Uhr, sowie die Kenndaten für den Lift B auf den magnetischen Datenträger des Skipasses aufzeichnet.

Die Kenndaten für den Lift A, wie abgelesene Uhrzeit und die neue Uhrzeit werden der Rechenanlage der Kontrollvorrichtung des Liftes B mitgeteilt, die dem Lift A vier Benutzerstunden (12 Uhr bis 16 Uhr) abzieht und dem Lift B vier Benutzerstunden gutschreibt.

Die von der Rechenanlage vorgenommenen Buchungen können dann in Form einer zweispaltigen Liste mit einer Spalte für den Lift A und einer Spalte für den Lift B ausgedruckt werden, wobei bei diesem Beispiel, die Spalte für den Lift A mit der Angabe "-4" und die Spalte für den Lift B mit der Angabe "+4" versehen wird. Die Gesamtzahl der Benutzerstunden für jeden Lift A bzw. B läßt sich dann durch einfaches Aufsummieren der betreffenden Spalte ermitteln.

Nach dem erfindungsgemäßen Verfahren kann also bei der Berechnung der Benutzerstunden von Benutzern mit Skipässen auf einen Speicher, also eine Rechenanlage mit großem Datenmedium, verzichtet werden, d.h. während nach dem bekannten Verfahren die Kenndaten für den Benutzer und die Uhrzeit von der Rechenanlage gespeichert werden müssen, werden diese Informationen bei dem erfindungsgemäßen Verfahren auf die Karte aufgezeichnet.

Aus diesem Grunde kann erfindungsgemäß auch auf sehr einfache Weise eine Doppelverwendung der Karte verhindert werden bzw. eine Abrechnung nach Halb- oder Ganztagessätzen erfolgen, wie in den Ansprüchen 2 und 3 angegeben.

**Patentansprüche**

1. Verfahren zur Ermittlung der Dauer der Benutzung bestimmter von mehreren Personentransport- und/oder Vergnügungseinrichtungen einer Anlage durch eine eine Berechtigungskarte besitzende Person, wobei an jeder der bestimmten Personentransport- bzw. Vergnügungseinrichtungen eine Vorrichtung zur Kontrolle von Berechtigungskarten vorgesehen ist, die eine Einrichtung zum Lesen der Berechtigungskarte beim Zugang zu der betreffenden Personentransport- bzw. Vergnügungseinrichtung sowie eine Rechenanlage, die jeden Zugang registriert, aufaufweist, dadurch gekennzeichnet, daß jede Kontrollvorrichtung außerdem eine Einrichtung zum Beschreiben der Berechtigungskarte aufweist; daß die Schreibeinrichtung der Kontrollvorrichtung derjenigen Personentransport- bzw. Vergnügungseinrichtung, die innerhalb einer Betriebsdauer der Anlage von der Person zuerst benutzt wird, den Zeitpunkt des Zugangs sowie Kenndaten für diese Personentransport- bzw. Vergnügungseinrichtung auf die Berechtigungskarte aufzeichnet; daß die Rechenanlage dieser Personentransport- bzw. Vergnügungseinrichtung derselben den Zeitraum bis zum Ablauf der Betriebsdauer gutschreibt; daß ferner in der Kontrollvorrichtung derjenigen Personentransport- bzw. Vergnügungseinrichtung, die von der Person anschließend benutzt wird, die von der Schreibeinrichtung der vorher benutzten Personentransport- bzw. Vergnügungseinrichtung aufgeschriebenen Daten gelesen werden und die Kenndaten für die anschließend benutzte Personentransport- bzw. Vergnügungseinrichtung sowie den Zeitpunkt des Zugangs zu derselben von der Schreibeinrichtung der Kontrollvorrichtung dieser Personentransport- bzw. Vergnügungseinrichtung auf der Berechtigungskarte aufgezeichnet werden und daß die Rechenanlage der Kontrollvorrichtung dieser Personentransport- bzw. Vergnügungseinrichtung derselben den Zeitraum bis zum Ablauf der Betriebsdauer gutschreibt und ihn der vorher benutzten Personentransport- bzw. Vergnügungseinrichtung abbucht.

2. Verfahren nach Anspruch 1, dadurch gekennzeichnet, daß die Berechtigungskarte nach dem Zugang für einen bestimmten Zeitraum, der oder dessen Beginn von der Schreibeinrichtung auf die Berechtigungskarte aufgezeichnet wird, mittels der Leseeinrichtung der Kontrollvorrichtung der anschließend benutzten Personentransport- bzw. Vergnügungseinrichtung ungültig gemacht wird.

3. Verfahren nach Anspruch 2, dadurch gekennzeichnet, daß die anschließend benutzte Personentransport- bzw. Vergnügungseinrichtung von der vorher benutzten verschieden ist.

**Claims**

1. A method for detecting the duration of use of some of a plurality of people-conveying and/or amusement means of an installation by a person possessing an authorizing card, an apparatus for checking authorizing cards being provided at each of the certain people-conveying or amusement means, said apparatus comprising a means for reading the authorizing card upon admittance to the people-conveying or amusement means in question, and a computer which registers each admittance, characterized in that each checking apparatus also comprises a means for writing on the authorizing card; in that the writing means of the checking apparatus of that people-conveying or amusement means which is first used by the person within an operating period of the installation records the time of admittance and characteristic data for this people-conveying or amusement means on the authorizing card; in that the computer of this people-conveying or amusement means credits the card with the period until expiration of the operating period; further, in that the data written by the writing means of the previously used people-conveying or amusement means are read in the checking apparatus of that people-conveying or amusement means which is then used by the person, and the characteristic data for the people-conveying or amusement means then used and the time of admittance thereto are recorded on the authorizing card by the writing means of the checking apparatus of this people-conveying or amusement means, and in that the computer of the checking apparatus of this people-conveying or amusement means credits the card with the time until expiration of the operating period and deducts the time on the previously used people-conveying or amusement means.

2. The method according to claim 1, characterized in that the authorizing card, after admittance for a certain time which, or the beginning of which, is recorded on the authorizing card by the writing means, is made invalid by the reading means of the checking apparatus of the people-conveying or amusement means then used.

3. The method according to claim 2, characterized in that the people-conveying or amusement means then used is different to that previously used.

**Revendications**

1. Système pour déterminer la durée d'utilisation, par une personne possédant une carte d'autorisation, de plusieurs dispositifs déterminés parmi les différents dispositifs de transport de personnes et/ou d'amusement d'une installation, un appareil de contrôle des cartes d'autorisation étant prévu à chacun des dispositifs déterminés de transport de personnes et/ou d'amusement, appareil qui comprend un équipement de lecture de la carte d'autorisation à l'accès au dispositif de transport de personnes ou d'amusement en question, et un ordinateur qui enregistre chaque accès, caractérisé en ce que chaque appareil de contrôle comprend en outre un équipement pour effectuer des enregistrements sur la carte d'autorisation; en ce que l'équipement enregistreur de l'appareil de contrôle de celui des dispositifs de transport de personnes ou d'amusement qui, au cours d'une période d'exploitation de l'installation, est initialement utilisé par la personne, enregistre sur la carte d'autorisation le moment d'accès ainsi que des données caractéristiques de ce dispositif de transport de personnes ou d'amusement; en ce que l'ordinateur de ce dispositif de transport de personnes ou d'amusement crédite ce dispositif de la durée s'étendant jusqu'à l'expiration de la période d'exploitation; en ce que les données enregistrées par l'équipement enregistreur du dispositif de transport de personnes ou d'amusement préalablement utilisé sont lues dans l'appareil de contrôle de celui des dispositifs de transport de personnes ou d'amusement qui est ensuite utilisé par la personne, tandis que l'équipement enregistreur de l'appareil de contrôle de ce dispositif de transport de personnes ou d'amusement qui est ensuite utilisé enregistre sur la carte d'autorisation les données caractéristiques de ce dispositif de transport de personnes ou d'amusement, ainsi que le moment d'accès à ce dispositif, et en ce que l'ordinateur de l'appareil de contrôle de ce dispositif de transport de personnes ou d'amusement crédite ce dernier de la durée s'étendant jusqu'à l'expiration de la période d'exploitation, et débite de cette durée le dispositif de transport de personnes ou d'amusement préalablement utilisé.

2. Système selon la revendication 1, caractérisé en ce qu'à la suite de l'accès, l'équipement de lecture de l'appareil de contrôle du dispositif de transport de personnes ou d'amusement qui est ensuite utilisé invalide la carte d'autorisation pour une durée déterminée, durée qui a été elle-même ou son début enregistré(e) par l'équipement enregistreur sur la carte d'autorisation.

3. Système selon la revendication 2, caractérisé en ce que le dispositif de transport de personnes ou d'amusement qui est ensuite utilisé est différent de celui préalablement utilisé.